(19) Europäisches Patentamt
European Patent Office
Office européen des brevets

(11) Veröffentlichungsnummer: **0 332 012 B1**

(12) **EUROPÄISCHE PATENTSCHRIFT**

(45) Veröffentlichungstag der Patentschrift: **25.11.92**

(51) Int. Cl.5: **C08L 81/06**, C08L 71/00, C08L 65/00

(21) Anmeldenummer: **89103444.9**

(22) Anmeldetag: **28.02.89**

# (54) Hochtemperaturbeständige Polyarylethersulfon-/Polyaryletherketon-Formmassen mit verbesserter Phasenbindung.

(30) Priorität: **05.03.88 DE 3807296**

(43) Veröffentlichungstag der Anmeldung:
**13.09.89 Patentblatt 89/37**

(45) Bekanntmachung des Hinweises auf die Patenterteilung:
**25.11.92 Patentblatt 92/48**

(84) Benannte Vertragsstaaten:
**BE CH DE FR GB LI**

(56) Entgegenhaltungen:
**EP-A- 0 113 112**
**EP-A- 0 176 988**
**EP-A- 0 176 989**
**EP-A- 0 247 512**
**EP-A- 0 265 842**

(73) Patentinhaber: **BASF Aktiengesellschaft**
**Carl-Bosch-Strasse 38**
**W-6700 Ludwigshafen(DE)**

(72) Erfinder: **Ittemann, Peter, Dr.**
**Wilhelm-Busch-Strasse 87**
**W-6700 Ludwigshafen(DE)**
Erfinder: **Heinz, Gerhard, Dr.**
**Im Vogelsang 2**
**W-6719 Weisenheim(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

**Beschreibung**

Die vorliegende Erfindung betrifft hochtemperaturbeständige thermoplastische Formmassen, enthaltend als wesentliche Komponenten

A) 10 bis 89 Gew.% eines Polyarylethersulfons,

B) 10 bis 89 Gew.% eines Polyaryletherketons,

C) 1 bis 30 Gew.% eines Blockcopolykondensats, aufgebaut aus

$C_1$) 20 bis 98 mol.% Polyarylethersulfonblöcken mit einem Molekulargewicht $\overline{M}_n$ im Bereich von 1500 bis 30.000 und

$C_2$) 2 bis 80 mol.% Polyaryletherketonblöcken.

Außerdem betrifft die vorliegende Erfindung die Verwendung derartiger Formmassen zur Herstellung von Formkörpern und Leiterplatten,

Mischungen (Blends) aus Polyarylethersulfonen und Polyaryletherketonen sowie ihre Verwendung zur Herstellung von Leiterplatten werden in der EP-A-176 988 und der EP-A-176 989 beschrieben. Speziell zur Verbesserung der Wärmeformbeständigkeit werden in der EP-A-176 989 Polyarylethersulfone mit wiederkehrenden Einheiten, die sich von Diphenylverbindungen ableiten, verwendet.

Insgesamt können die Produkte jedoch noch nicht in vollem Umfang zufriedenstellen, insbesondere im Hinblick auf ihre Schlagzähigkeitseigenschaften.

Aufgabe der vorliegenden Erfindung war es daher, Mischungen (Blends) auf der Basis von Polyarylethersulfonen und Polyaryletherketonen zur Verfügung zu stellen, die sich durch ein ausgewogenes Eigenschaftsspektrum, insbesondere gute Schlagzähigkeitseigenschaften auszeichnen.

Erfindungsgemäß wird diese Aufgabe durch die eingangs definierten hochtemperaturbeständigen thermoplastischen Formmassen gelöst.

Bevorzugte Massen dieser Art sind den Unteransprüchen zu entnehmen.

Als Komponente A) enthalten die erfindungsgemäßen hochtemperaturbeständigen thermoplastischen Formmassen 10 bis 89, vorzugsweise 20 bis 75 und insbesondere 25 bis 75 Gew.% eines Polyarylethersulfons.

Geeignete Polyarylethersulfone sind an sich bekannt und in der Literatur beschrieben oder kommerziell erhältlich.

Nur stellvertretend sei hier auf die EP-A 135 130, die EP-A 113 112, die EP-A 97 370 und die US-A 4 008 237 verwiesen, in denen entsprechende Produkte wie auch Verfahren zu deren Herstellung beschrieben werden.

Bevorzugt werden Polyarylethersulfone mit wiederkehrenden Einheiten der allgemeinen Formeln I und/oder II

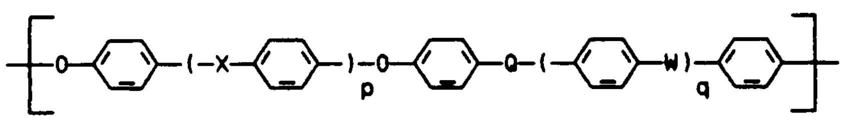

(I)

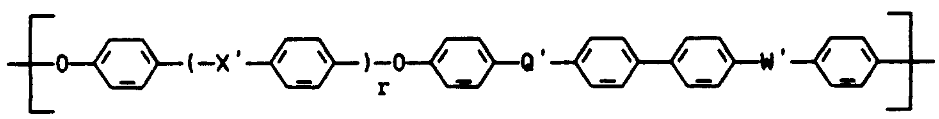

(II)

oder deren kernsubstituierten $C_1$-$C_6$-Alkyl- oder $C_1$-$C_6$-Alkoxy-, Aryl-, Chlor- oder Fluorderivaten.

Die Substituenten X, X′, Q, Q′, W und W′ können jeweils $-SO_2-$, -O-, eine chem. Bindung oder CRR′ sein, in jedem Falle ist jeweils mindestens einer der Substituenten X, Q oder W eine $-SO_2$-Gruppe.

Entsprechendes gilt für die Substituenten X′, Q′ und W′, d.h. auch von diesen ist mindestens einer eine $SO_2$-Gruppe.

R und R′ im Substituenten -CRR′- stellen Wasserstoffatome, $C_1$-$C_6$-Alkyl-oder $C_1$-$C_6$-Alkoxygruppen, Arylgruppen oder deren Chlor- oder Fluorderivate dar. Beispiele sind Methyl, Ethyl, i- und n-Propyl, entsprechende Alkoxygruppen, $CF_3$ und Phenyl. Bevorzugte Substituenten sind Wasserstoffatome, Methyl, Phenyl und Trifluormethyl ($CF_3$).

Der Anteil der wiederkehrenden Einheiten der Formeln I und II kann jeweils 0 bis 100 mol.% betragen, d.h. Polyarylethersulfone, die ausschließlich aus Einheiten der allgemeinen Formel I oder II bestehen, sind ebenso geeignet, wie Polyarylethersulfone, die beide Einheiten in beliebigem molaren Verhältnis enthalten.

In solchen Produkten können die verschiedenen Einheiten statistisch oder in Blockform verteilt vorliegen.

Bevorzugte Beispiele für wiederkehrende Einheiten der allgemeinen Formeln I und II sind nachstehend aufgeführt:

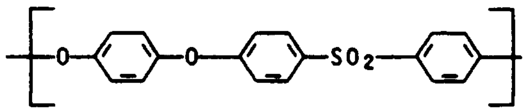

(I1)

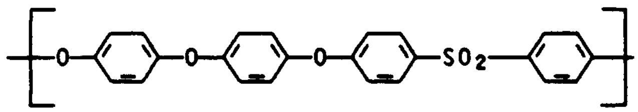

(I2)

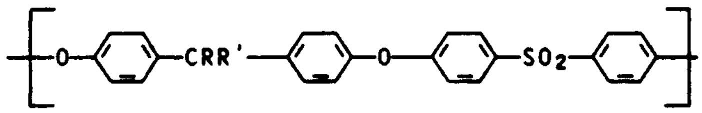

(I3)

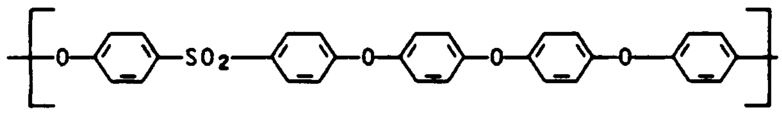

(I4)

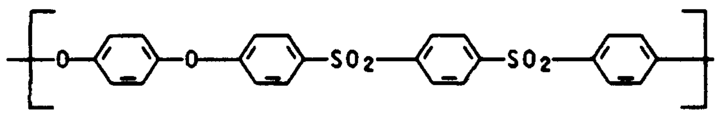

(I5)

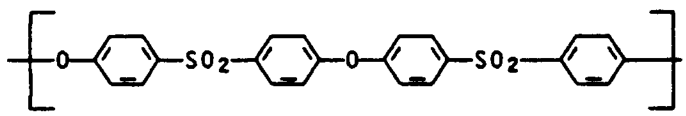

(I6)

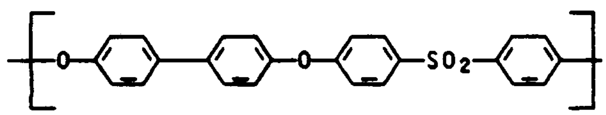

(I7)

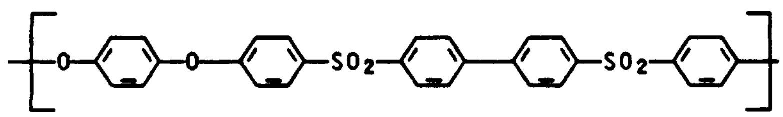

(II1)

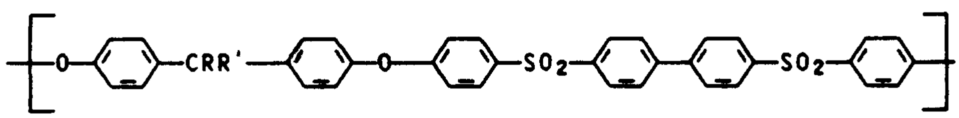

(II2)

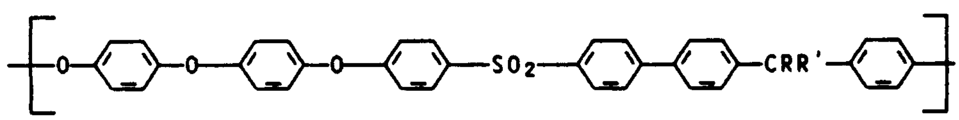

(II3)

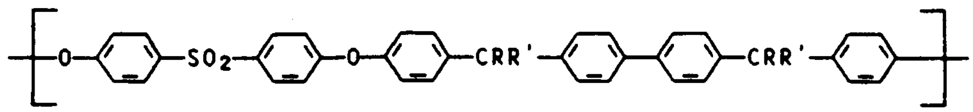

(II4)

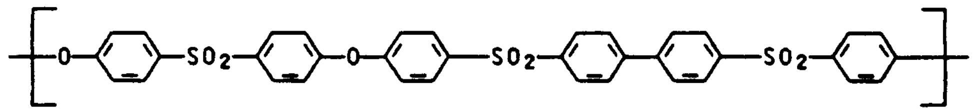

(II5)

wobei diese Auswahl nur stellvertretend für die unter die allgemeinen Formeln I und II fallenden Einheiten steht. Über die Substituenten X, Q, W bzw. X′, Q′ und W′ und die Parameter p, q und r lassen sich die vorstehenden Beispiele wie folgt beschreiben:

| | p | q | X | Q | W |
|---|---|---|---|---|---|
| I1 | 0 | 0 | - | $-SO_2-$ | - |
| I2 | 1 | 0 | -O- | $-SO_2-$ | - |
| I3 | 1 | 0 | -CRR′- | $-SO_2-$ | - |
| I4 | 1 | 1 | $-SO_2-$ | -O- | -O- |
| I5 | 0 | 1 | - | $-SO_2-$ | $-SO_2-$ |
| I6 | 1 | 0 | $-SO_2-$ | $-SO_2-$ | - |
| I7 | 1 | 0 | chem. Bdg. | $-SO_2-$ | - |
| | | r | X′ | Q′ | W′ |
| II1 | | 0 | - | $-SO_2-$ | $-SO_2-$ |
| II2 | | 1 | -CRR′- | $-SO_2-$ | $-SO_2-$ |
| II3 | | 1 | -O- | $-SO_2-$ | -CRR′- |
| II4 | | 1 | $-SO_2-$ | -CRR′- | -CRR′- |
| II5 | | 1 | $-SO_2-$ | $-SO_2-$ | $-SO_2-$ |

Obwohl, wie bereits erwähnt, grundsätzlich beliebige Kombinationen der Substituenten X, Q und W bzw. X′, Q′ und W′ möglich sind, werden im allgemeinen solche Einheiten bevorzugt, in denen Q und W bzw. Q′ und W′ gleich sind, da die entsprechenden Monomeren in der Regel leichter zugänglich sind.

Das Molekulargewicht (Zahlenmittelwert) $\overline{M}_n$ der Polyarylethersulfone A liegt im Bereich von 1500 bis 200.000, vorzugsweise von 2000 bis 150.000 und insbesondere von 5000 bis 60.000.

Es versteht sich, daß auch Mischungen verschiedener Polyarylethersulfone als Komponente A geeignet sind.

Als Komponente B enthalten die erfindungsgemäßen hochtemperaturbeständigen thermoplastischen Formmassen 10 bis 89, vorzugsweise 20 bis 80 und insbesondere 25 bis 75 Gew.% eines oder mehrerer Polyaryletherketone, wie sie dem Fachmann an sich bekannt und in der Literatur beschrieben sind.

Es eignen sich prinzipiell alle Polyaryletherketone, die auf nukleophilem Weg (durch Kondensation von Dihalogen- mit Dihydroxyverbindungen) oder auf elektrophilem Weg (Friedel-Crafts-Acylierung) hergestellt werden können.

Derartige Verfahren werden z.B. in der DE-A-26 50 943 und der EP-A-1879 beschrieben, um nur jeweils ein Beispiel für die beiden genannten Herstellungsverfahren zu erwähnen. Im übrigen sind diese Herstellungsverfahren dem Fachmann bekannt.

Bevorzugt werden Polyaryletherketone mit wiederkehrenden Einheiten der allgemeinen Formeln III und/oder IV

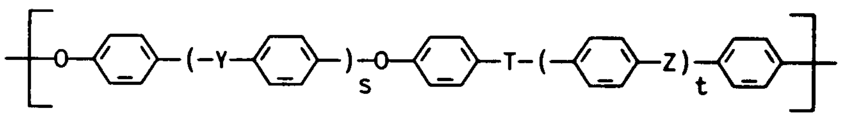

(III)

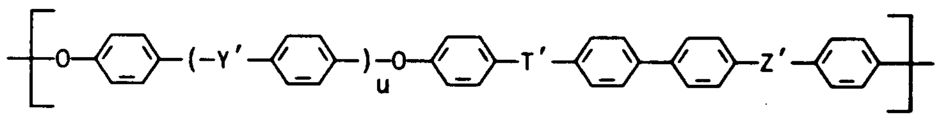

(IV)

Wie bei der Komponente A können die Einheiten der Formel III und/oder IV auch mit $C_1$-$C_6$-Alkyl-, $C_1$-$C_6$-Alkoxy-, Phenyl-, Chlor- oder Fluor am aromatischen Kern substituiert sein.

Die Substituenten Y, Y′, T, T′, Z und Z′ können jeweils -CO-, CR″ R‴-, eine chem. Bindung oder -O-sein, mit der Maßgabe, daß mindestens einer der Substituenten Y, T, Z bzw. Y′, T′ und Z′ eine -CO-Gruppe ist.

s, t und u haben jeweils den Wert 0 oder 1.

Die Polyaryletherketone B) können nur aus Einheiten je einer der Formeln III und IV oder aus Einheiten der beiden Formeln aufgebaut sein; in letzterem Fall können die Einheiten entweder statistisch oder in Form von Blöcken angeordnet sein. Der Anteil der Einheiten unterliegt keiner Beschränkung und kann jeweils von 0 bis 100 mol-%, vorzugsweise jeweils 5 bis 95 mol-% und insbesondere jeweils 15 bis 85 mol-% betragen.

Beispiele für wiederkehrende Einheiten der Formeln III und IV erhält man, wenn man in den vorstehend aufgeführten Beispielen für die Einheiten I und II die -$SO_2$-Gruppen durch -CO-Gruppen ersetzt.

Diese Einheiten lassen sich mit den Parametern T, T′, Y, Y′, Z, Z′, s, t, und u analog wie die Beispiele der wiederkehrenden Einheiten I und II beschreiben.

Das Molekulargewicht (Zahlenmittelwert) $\overline{M}_n$ der Polyaryletherketone B liegt im allgemeinen im Bereich von 1500 bis 200.000, vorzugsweise von 2000 bis 150.000 und insbesondere von 3000 bis 60.000.

Als wesentliche Komponente C enthalten die erfindungsgemäßen hochtemperaturbeständigen thermoplastischen Formmassen 1 bis 30, vorzugsweise 3 bis 25 und insbesondere 5 bis 20 Gew.% eines Blockcopolykondensats, aufgebaut aus 20 bis 98, vorzugsweise 30 bis 95 mol-% Polyarylethersulfonblökken und 2 bis 80, vorzugsweise 5 bis 70 mol-% Polyaryletherketonblöcken.

Die Polyarylethersulfonblöcke sind vorzugsweise aufgebaut aus wiederkehrenden Einheiten der vorstehend genannten allgemeinen Formeln I und II, die Polyaryletherketonblöcke vorzugsweise aus Einheiten der bereits dargestellten allgemeinen Formeln III und/oder IV. Der Anteil der Einheiten der Formeln I und II bzw. III und IV an den Polyarylethersulfon- bzw. Polyaryletherketonblöcken unterliegt dabei keiner besonderen Beschränkung und kann jeweils von 0 bsi 100 mol-% betragen. Die Verteilung der am Aufbau der Polyarylethersulfon- bzw. Polyaryletherketonblöcken beteiligten Einheiten innerhalb der Blöcke kann statistisch oder blockweise sein.

Häufig hat es sich als vorteilhaft herausgestellt, Blockcopolykondensate C einzusetzen, deren wiederkehrende Einheiten in den Polyarylethersulfonblöcken den Einheiten der Polyarylethersulfone A und deren wiederkehrende Einheiten in den Polyaryletherketonblöcken $C_2$ den Einheiten in den Polyaryletherketonen B entsprechen. Dies ist jedoch keine zwingende Notwendigkeit.

Die einzelnen Polyarylethersulfonblöcke $C_1$ weisen ein Molekulargewicht (Zahlenmittelwert) im Bereich von 1.500 bis 30.000, vorzugsweise von 2.000 bis 25.000 und insbesondere von 3.000 bis 22.000 auf.

Das Molekulargewicht (Zahlenmittelwert) der einzelnen Polyaryletherketonblöcke $C_2$ liegt vorzugsweise im Bereich von 500 bis 15.000, insbesondere von 1.500 bis 10.000.

Die Blockcopolykondensate C können nach an sich bekannten Verfahren zur Herstellung von Blockcopolymeren hergestellt werden, wie sie in der Literatur beschrieben sind. Grundsätzlich können die Blöcke I bis IV getrennt hergestellt und anschließend miteinander verknüpft werden oder aber die Blockcopolykondensate werden durch entsprechende aufeinanderfolgende getrennte Zugabe der Dihydroxyverbindungen in einem Zuge synthetisiert.

Die Verfahrensbedingungen wie Temperatur, Druck, geeignete Lösungsmittel und evtl. Zusätze (Katalysatoren) sind die gleichen, wie sie für statistische Copolykondensate in der EP-A 113 112 und der EP-A 135 130 beschrieben sind, so daß sich hier nähere Angaben erübrigen.

Besonders geeignet ist die Umsetzung in aprotischen polaren Lösungsmitteln in Gegenwart von wasserfreien Alkalicarbonaten als Katalysatoren. Eine besonders bevorzugte Kombination ist N-Methylpyrrolidon als Lösungsmittel und $K_2CO_3$ als Katalysator.

Die Menge an N-Methylpyrrolidon beträgt im allgemeinen 5 bis 100 Mol, vorzugsweise 5 bis 20 Mol,

bezogen auf ein Mol Monomere. Dies ergibt einen bevorzugten Feststoffgehalt der Reaktionslösung im Bereich von 5 bis 50 Gew.%, besonders bevorzugt 10 bis 40 Gew.%.

Das bei der Polykondensation entstehende Wasser kann mit Hilfe eines Azeotropbildners, Anlegen eines Unterdrucks oder vorzugsweise durch Einleiten eines Stickstoffstroms und Abdestillation entfernt werden.

Als Azeotropbildner eignen sich alle Verbindungen, die bei Normaldruck im Bereich der Reaktionstemperatur sieden und die sich mit dem Reaktionsgemisch homogen mischen lassen, ohne chemische Reaktionen einzugehen.

Die Reaktionstemperatur liegt im allgemeinen im Bereich von 130 bis 220 °C, vorzugsweise 150 bis 210 °C; die Gesamt-Reaktionsdauer richtet sich nach dem gewünschten Kondensationsgrad, liegt aber im allgemeinen im Bereich von 0,1 bis 15 Stunden in den einzelnen Stufen.

Im Anschluß an die Polykondensation können zur Stabilisierung freie Phenolat-Endgruppen mit einem Aryl- oder Alkylierungsmittel, wie z.B. Methylchlorid, umgesetzt werden. Dies erfolgt vorzugsweise bei Temperaturen von 50-200 °C, vorzugsweise 50-150 °C.

Das bei der Polykondensation mit $K_2CO_3$ anfallende suspendierte Alkalihalogenid kann mit einer geeigneten Trenneinrichtung, beispielsweise einem Klärfilter oder einer Zentrifuge abgetrennt werden.

Die Isolierung der Copolykondensate aus der Lösung kann durch Verdampfen des Lösungsmittels oder Ausfällung in einem geeigneten Nichtlösungsmittel erfolgen.

Als Beispiele für Dihydroxy- und Dihalogenverbindungen, die zur Herstellung von Polyarylethersulfonen A, Polyaryletherketonen B und Blockcopolykondensaten C bei der Herstellung auf nukleophilem Weg eingesetzt werden können, seien die folgenden genannt:

Dihydroxyverbindungen

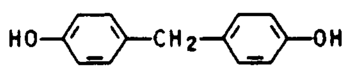

Di-(4-hydroxyphenyl)methan

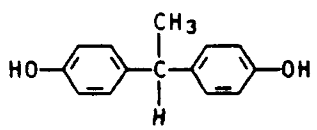

1,1-Di(4-hydroxyphenyl)ethan

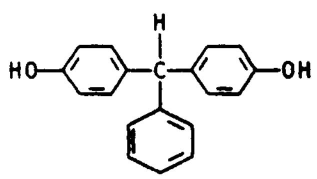

1-Phenyl-1,1-di-(4-hydroxyphenyl)-methan

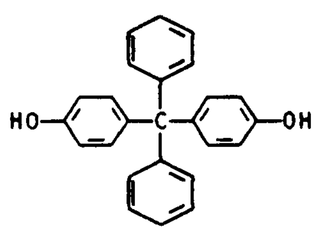

Diphenyl-di-(4-hydroxyphenyl)methan

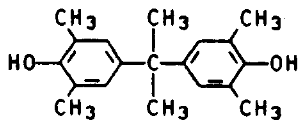

Tetramethylbisphenol A

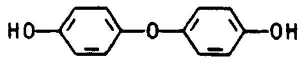

4,4'-Dihydroxydiphenylether

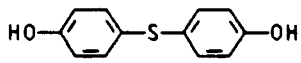

4,4'-Dihydroxydiphenylsulfan

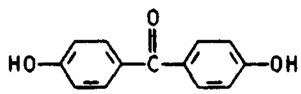

4,4'-Dihydroxybenzophenon

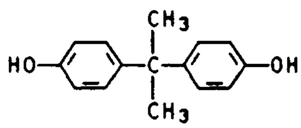

Bisphenol A

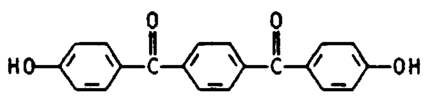

1,4-Di(4-hydroxybenzoyl)benzol

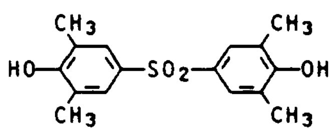

Tetramethylbisphenol S

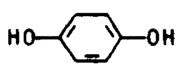

Hydrochinon

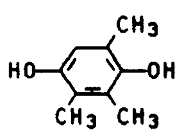

2,3,6-Trimethylhydrochinon

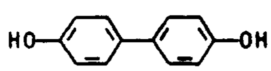

Dihydroxydiphenyl

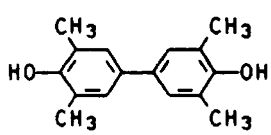

3,3',5,5'-Tetramethyldihydroxydiphenyl

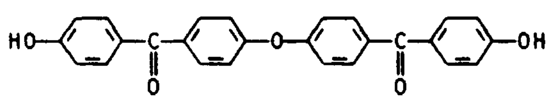

Dihydroxybenzophenonether

| Dihalogenverbindungen | Bezeichnung der Chlorverbindung |
|---|---|
| 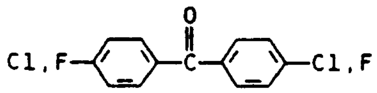 | 4,4'-Dichlorbenzophenon |
| 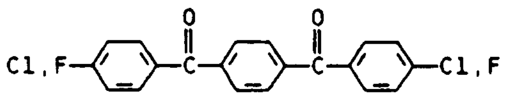 | 1,4-Di(4-chlorbenzoyl)benzol |
| 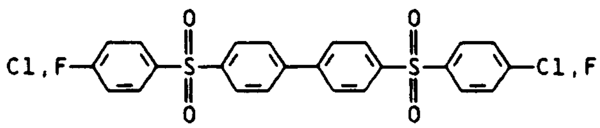 | 4,4'-Di-(4-chlorphenylsulfonyl)-diphenyl |
| 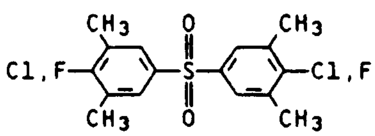 | 3,3',5,5'-Tetramethyl-4,4'-dichlordiphenylsulfon |
| 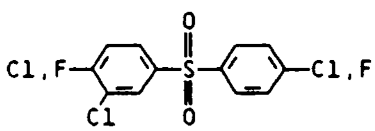 | 3'-Chlor-4,4'-Dichlordiphenylsulfon |
| 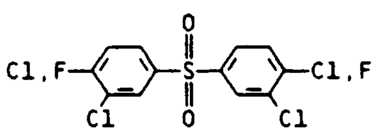 | 3,3',4,4'-Tetrachlordiphenylsulfon |
| 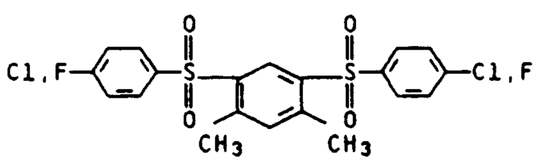 | 1,5-Dimethyl-2,4-di(4'-chlorphenylsulfonyl)benzol |

Als Monomere mit Biphenyleinheiten, die zur Herstellung der wiederkehrenden Einheiten II und IV eingesetzt werden können, seien nur stellvertretend genannt:

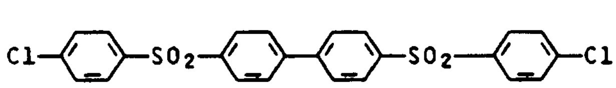

4,4'-Di(4-chlorphenylsulfonyl)biphenyl

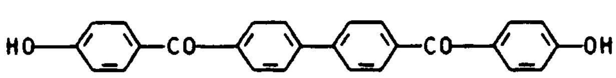

4,4'-Di(4-hydroxybenzoyl)-biphenyl

sowie grundsätzlich Verbindungen analoger Struktur in denen die -$SO_2$- oder -CO-Gruppen durch andere Grupen (O-, CRR'-) ersetzt sind.

Die vorstehend genannten Verbindungen können, solange die Voraussetzungen des Anspruchs 1 erfüllt sind, prinzipiell in beliebiger Kombination miteinander umgesetzt werden.

Die Polyaryletherketone B können, wie bereits erwähnt, auch durch Friedel-Crafts-Acylierung auf elektrophilem Weg hergestellt werden. Entsprechende Ausgangsverbindungen wie auch Verfahrensbedingungen sind dem Fachmann bekannt.

Die erfindungsgemäßen Formmassen können mit anderen Thermoplasten, beispielsweise Polyestern, Polyamiden, Polyurethanen, Polyolefinen, Polyvinylchlorid und Polyoxymethylenen in Mengen von 5 bis 60 Gew.-%, vorzugsweise von 20 bis 50 Gew.-%, bezogen auf die Formmassen, gemischt werden (Komponente D).

Sie können außerdem mit verstärkend wirkenden Füllstoffen, gegebenenfalls transparenten Pigmenten und anderen Hilfs- und Zusatzstoffen modifiziert werden (Komponente E).

Als verstärkend wirkende Füllstoffe seien beispielsweise Asbest, Kohle- und vorzugsweise Glasfasern genannt, wobei die Glasfasern z.B. in Form von Glasgeweben, -matten, -vliesen und/oder vorzugsweise Glasseidenrovings oder geschnittener Glasseide aus alkaliarmen E-Glasen mit einem Durchmesser von 5 bis 20 $\mu$m, vorzugsweise 8 bis 15 $\mu$m, zur Anwendung gelangen, die nach ihrer Einarbeitung eine mittlere Länge von 0,05 bis 1 mm, vorzugsweise 0,1 bis 0,5 mm, aufweisen. Die mit Glasseidenrovings oder geschnittener Glasseide verstärkten Formmassen enthalten zwischen 10 und 60 Gew.%, vorzugsweise 20 bis 50 Gew.%, des Verstärkungsmittels, bezogen auf das Gesamtgewicht, während die imprägnierten Glasgewebe, -matten und/oder -vliese zwischen 10 und 80 Gew.%, vorzugsweise zwischen 30 und 60 Gew.%, Formmassen, bezogen auf das Gesamtgewicht, enthalten. Als Pigmente eignen sich beispielsweise Titandioxid, Cadmiumoxid, Zinksulfid, Bariumsulfat und Ruß. Als andere Zusatz- und Hilfsstoffe kommen beispielsweise in Betracht Farbstoffe, Schmiermittel, wie z.B. Graphit, Polytetrafluorethylen oder Molybdändisulfid, Schleifmittel, wie z.B. Carborund, Lichtstabilisatoren und Hydrolyseschutzmittel. Auch Wollastonit, Calciumcarbonat, Glaskugeln, Quarzmehl und Bornitrid oder Mischungen dieser Füllstoffe sind verwendbar. Die Pigmente, Zusatz- und Hilfsstoffe werden üblicherweise in Mengen von 0,01 bis 3 Gew.%, bezogen auf das Gesamtgewicht der Formmassen, eingesetzt.

Die in den nachfolgenden Beispielen angegebenen reduzierten Viskositäten $\eta_{red} = \eta_{spec/c}$ wurden bei 25° C in 1 gew.%iger Lösung in 4-Chlorphenol/1,2-Dichlorbenzol (Gewichtsverhältnis 3:2) (für die Polyarylethersulfone) bzw. in 1 %iger Lösung in 96 gew.%iger $H_2SO_4$ (für die Polyaryletherketone) bestimmt.

## Beispiele

Die in den Beispielen eingesetzten Polyarylethersulfone A wurden durch Umsetzung der entsprechenden Dihydroxy- und Dihalogenverbindungen in N-Methylpyrrolidon als Lösungsmittel und unter Verwendung von $K_2CO_3$ als Base nach dem z.B. in der EP-A 113 112 beschriebenen Verfahren hergestellt.

Im einzelnen wurden folgende Polyarylethersulfone eingesetzt:

A₁: 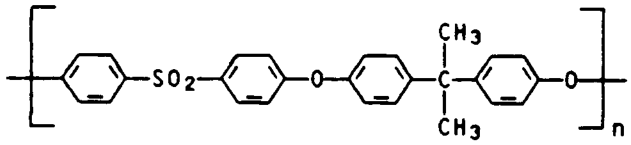 $\eta_{red} = 0{,}85$

A₂: 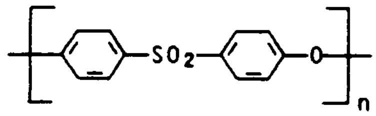 $\eta_{red} = 0{,}80$

A₃: 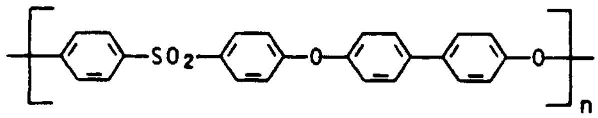 $\eta_{red} = 0{,}89$

A₄: 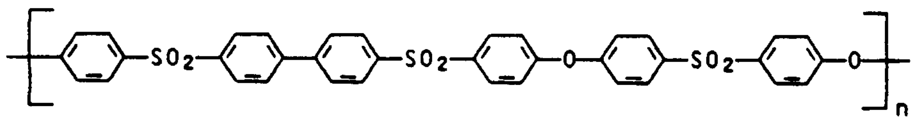 $\eta_{red} = 0{,}75$

A₅: 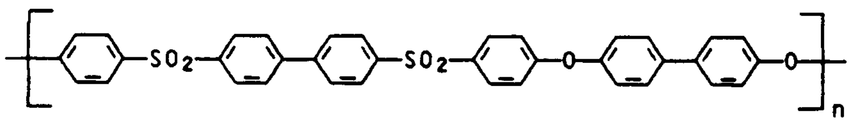 $\eta_{red} = 0{,}91$

A₆: 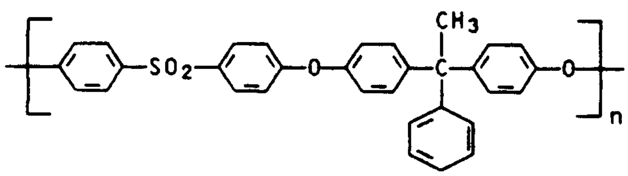 $\eta_{red} = 0{,}72$

A₇: 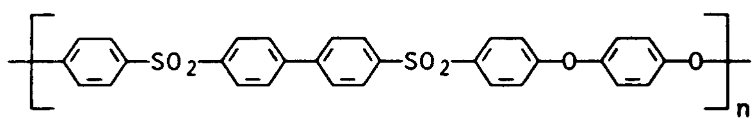

Die Polyaryletherketone B wurden durch Umsetzung von Dihydroxyverbindungen mit Dihalogenverbindungen in N-Methylpyrrolidon oder Diphenylsulfon als Lösungsmittel und $K_2CO_3$ als Base nach dem z.B. in der EP-A 1879 beschriebenen Verfahren hergestellt.

Es wurden Polyaryletherketone mit folgenden wiederkehrenden Einheiten eingesetzt:

$B_1$: 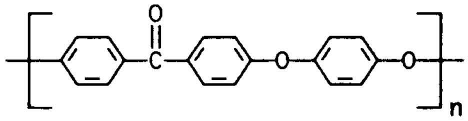 $\eta_{red} = 1,3$

$B_2$: 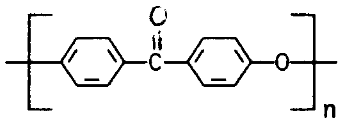 $\eta_{red} = 1,27$

$B_3$: 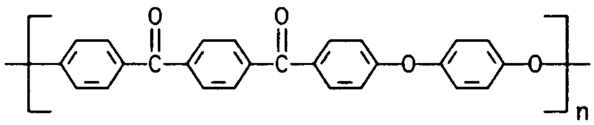 $\eta_{red} = 1,31$

$B_4$: 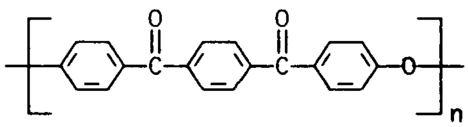 $\eta_{red} = 1,20$

$B_5$: 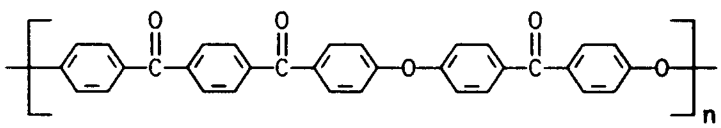 $\eta_{red} = 1,15$

$B_6$: 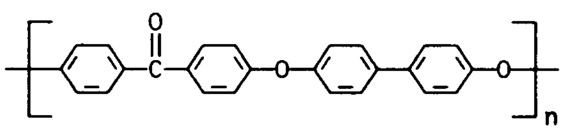 $\eta_{red} = 1,35$

$B_7$: 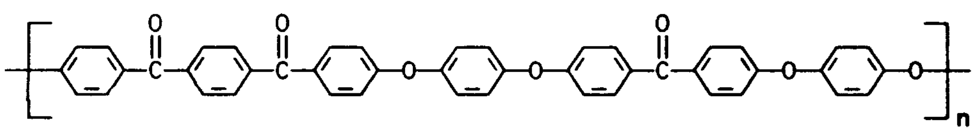

$\eta_{red} = 1,33$

$B_8$: 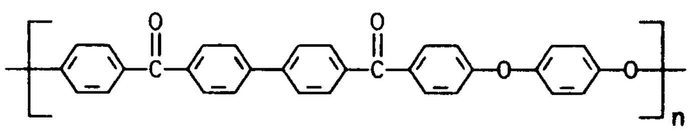 $\eta_{red} = 1,32$

Die Blockcopolykondensate C wurden unter Verwendung von folgenden Ausgangsverbindungen hergestellt:

| | | Molekulargewicht [g/mol] |
|---|---|---|
| C/1 | 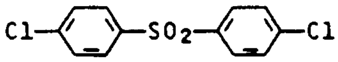 | 287,2 |
| C/2 | 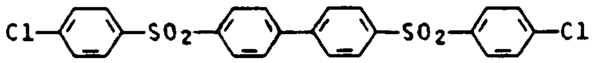 | 503,4 |
| C/3 | 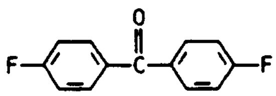 | 218 |
| C/4 | 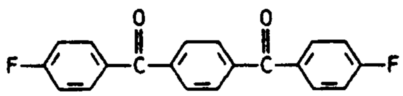 | 322 |
| C/5 | 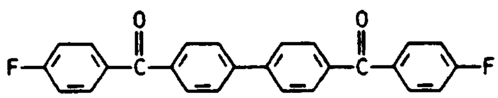 | 398 |
| C/6 | 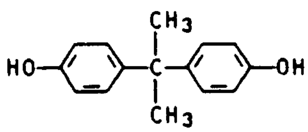 | 228 |
| C/7 | 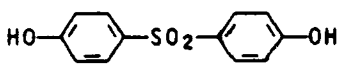 | 250 |
| C/8 | 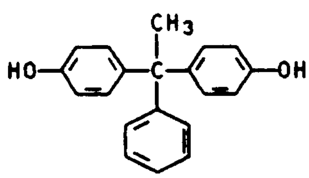 | 290 |
| C/9 | 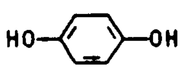 | 110 |
| C/10 | 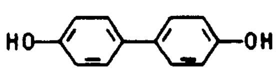 | 186 |
| C/11 | 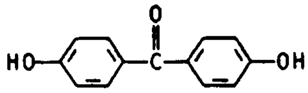 | 214 |

| | | Molekulargewicht |
|---|---|---|
| C/12 | 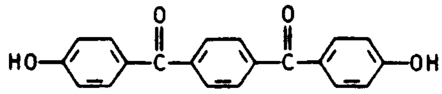 | 318 |
| C/13 | 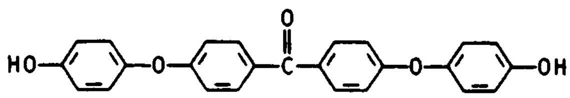 | 398 |

Allgemeine Vorschrift zur Herstellung der Blockcopolykondensate C

Block 1:

Ein Gemisch der Ausgangsverbindungen (Dihalogenkomponente, Dihydroxykomponente und Kaliumcarbonat) wurden in N-Methylpyrrolidin-2-on unter ständigem Rühren und Durchleiten von Stickstoff auf 170 ° C erhitzt und das entstehende Reaktionswasser mit Hilfe eines Wasserabscheiders 4 Stunden lang bei dieser Temperatur entfernt. Anschließend wurde die Temperatur auf 185 ° C gesteigert und 4 Stunden bei dieser Temperatur gerührt. Damit war die Bildung des ersten Polymer-Blockes beendet.

Block 2:

Nach dem Abkühlen des Reaktionsgemisches auf 140 ° C wurde ein Gemisch der Komponenten des zweiten Blocks hinzugegeben (Dihalogenkomponente, Dihydroxykomponente und Kaliumcarbonat). Es erfolgte die Zugabe von weiterem N-Methylpyrrolidin-2-on oder falls nötig der vollständige Ersatz des zur Synthese des ersten Blockes verwendeten Lösungsmittels durch Diphenylsulfon als Lösungsmittel.

Bei Verwendung von NMP wurde unter ständigem Durchleiten von Stickstoff auf 150 ° C erhitzt und nach 1 Stunde die Temperatur auf 185 ° C gesteigert. Das Reaktionsgemisch wurde ca. 3 bis 7 Stunden bei dieser Temperatur gehalten bis die gewünschte Molmasse erreicht war. Durch 30minütiges Einleiten eines Methylchlorid-Stromes wurde die Polykondensation abgebrochen. Die anorganischen Bestandteile wurden abfiltriert, das Polymere in Wasser ausgefällt, mehrmals mit Wasser dispergiert und 12 Stunden bei 80 ° C im Vakuum getrocknet.

Bei Verwendung von Diphenylsulfon als Lösungsmittel für den Aufbau des zweiten Blockes wurde Diphenylsulfon zugegeben und das zur Synthese des ersten Blockes benötigte N-Methylpyrrolidin-2-on abdestilliert. Unter ständigem Durchleiten von Stickstoff wurde auf 250 ° C erhitzt und bei dieser Temperatur das Reaktionswasser abdestilliert. Dann wurde während 1 Stunde die Temperatur auf 310 ° C gesteigert. Das Reaktionsgemisch wurde unter Verfestigung erkalten gelassen und dann in einer Mühle kleingemahlen. Das Diphenylsulfon wurde mehrmals mit Aceton und anschließend die während der Reaktion entstandenen Salze mehrmals mit Wasser extrahiert (Restsalzgehalt, vorzugsweise, aber nicht notwendigerweise < 100 ppm gemessen als Kalium).

Das so erhaltene pulverförmige Blockcopolymere wurde direkt als Pulver zur Mischung der Granulate zugegeben oder vorher mit Hilfe eines Extruders granuliert.

In Tabelle 1 sind die Angaben zur Herstellung der Blockcopolykondensate zusammengefaßt. Die Viskositätszahl (VZ) wurde in 1 %iger Lösung in Phenol/o-Dichlorbenzol (Gew.-Verh. 1:1) bei 25 ° C bestimmt.

Tabelle 1

| Bezeichnung | C1 | C2 | C3 | C4 | C5 | C6 | C7 | C8 | C9 | C10 |
|---|---|---|---|---|---|---|---|---|---|---|
| C/ 1 [g] | 287,2 | 287,2 | 287,2 | 287,2 | 287,2 | 287,2 | 287,2 | 287,2 | 287,2 | 287,2 |
| C/ 2 [g] | | | | | | | | | | |
| C/ 6 [g] | 253,1 | 253,1 | 239,7 | 263 | | | | | | |
| C/ 7 [g] | | | | | 257,8 | 257,8 | 262,8 | 275,3 | | |
| C/ 8 [g] | | | | | | | | | | |
| C/ 9 [g] | | | | | | | | | | |
| C/10 [g] | | | | | | | | | 195,5 | 195,5 |
| $K_2CO_3$ [g] | 156,6 | 156,6 | 159,6 | 175,8 | 156,6 | 156,6 | 159,6 | 167,2 | 159,6 | 159,6 |
| NMP [ml] | 1050 | 1050 | 950 | 900 | 1000 | 1000 | 1000 | 900 | 800 | 800 |
| C/ 3 | 74,9 | 76,4 | | | 144,6 | 144,6 | | | 86,7 | 126,8 |
| C/ 4 | | | 128,0 | 102,9 | | | 184,8 | 450,3 | | |
| C/ 5 | | | | | | | | | | |
| C/ 9 | 33,0 | | 36,7 | | 66,1 | | 55,1 | | | |
| C/10 | | | | | | | | | 62,1 | |
| C/11 | | 64,3 | | 64,3 | | 128,5 | | | | |
| C/12 | | | | | | | | 397,9 | | |
| C/13 | | | | | | | | | | |
| $K_2CO_3$ [g] | 45,6 | 45,6 | 50,7 | 45,6 | 91,2 | 91,2 | 76,0 | 190,0 | 50,7 | 76,0 |
| zusätzliches NMP [ml] | 850 | 1000 | 1300 | 1100 | 1600 | 1900 | 1600 | | 1350 | 1100 |
| Diphenylsulfon [ml] | | | | | | | | 7300 | | |
| VZ [ml/g] | 70 | 66 | 78 | 87 | 93 | 67 | 69 | 65 | 73 | 71 |

Tabelle 1: Fortsetzung

| Bezeichnung | C11 | C12 | C13 | C14 | C15 | C16 | C17 |
|---|---|---|---|---|---|---|---|
| C/ 1 [g] | | | 287,2 | | | | |
| C/ 2 [g] | 503,4 | 503,4 | | 503,4 | 503,4 | 503,4 | 503,4 |
| C/ 6 [g] | 257,8 | | | 262,8 | | | |
| C/ 7 [g] | | | | | | | |
| C/ 8 [g] | | | 299,1 | | | | |
| C/ 9 [g] | | | | | | 115,6 | 115,6 |
| C/10 [g] | | 191,8 | | | 191,8 | | |
| $K_2CO_3$ [g] | 156,6 | 156,6 | 159,6 | 159,6 | 156,6 | 159,6 | 159,6 |
| NMP [ml] | 1500 | 1400 | 1100 | 1300 | 1300 | 1200 | 1200 |
| C/ 3 | 74,9 | | 144,6 | 380,5 | 103,2 | | |
| C/ 4 | | 135,1 | | | | 252,0 | |
| C/ 5 | | | | | | | 225,3 |
| C/ 9 | | | 66,1 | 183,5 | 47,2 | | 55,1 |
| C/10 | 55,9 | | | | | | |
| C/11 | | 80,3 | | | | | |
| C/12 | | | | | | | |
| C/13 | | | | | | 284,6 | |
| $K_2CO_3$ [g] | 45,6 | 57,0 | 91,2 | 253,4 | 65,2 | 108,6 | 76,0 |
| zusätzliches NMP [ml] | 1600 | 2100 | 1500 | | 1600 | 2500 | 2200 |
| Diphenylsulfon [ml] | | | | 5400 | | | |
| VZ [ml/g] | 84 | 95 | 83 | 71 | 74 | 68 | 72 |

Zur Herstellung der Blends aus Polyarylethersulfonen A, Polyaryletherketonen B und Blockcopolykondensaten C

Es wurde eine Mischung jeweils eines Polyarylethersulfons, eines Polyaryletherketons und eines Blockcopolykondensates durch Mischen des Granulats hergestellt. Auf einem ZSK 53-Extruder der Firma Werner und Pfleiderer wurde dieses Gemisch, das aus den in Tabelle 2 genannten Polyarylethersulfonen, Polyaryletherketonen und Blockcopolykondensaten bestand, bei Temperaturen von 350 °C bis 390 °C aufgeschmolzen. Der Durchsatz betrug 50 kg/h, die Umdrehungszahl 200 Umdrehungen/Minute.

In der Tabelle 2 sind die Zusammensetzung der einzelnen Massen und die Ergebnisse der durchgeführten Messungen aufgeführt.

Die Ergebnisse in Tabelle 2 zeigen, daß die erfindungsgemäßen Formmassen entsprechenden Massen ohne die Komponente C in den Eigenschaften überlegen sind.

Tabelle 2

| Beispiel Nr. | DIN-Norm | | Vergleichsbeispiel 1 | Vergleichsbeispiel 2 | Vergleichsbeispiel 3 | 1 | 2 | 3 | 4 | 5 | 6 | 7 | 8 | 9 |
|---|---|---|---|---|---|---|---|---|---|---|---|---|---|---|
| Polyarylethersulfon | | | A2 | A3 | A1 | A1 | A1 | A1 | A1 | A1 | A2 | A2 | A2 | A2 |
| | | Gew.% | 50 | 50 | 80 | 63 | 25 | 30 | 80 | 55 | 44 | 30 | 80 | 20 |
| Polyaryletherketon | | | B1 | B1 | B1 | B1 | B1 | B2 | B3 | B5 | B1 | B2 | B3 | B4 |
| | | Gew.% | 50 | 50 | 20 | 17 | 65 | 50 | 10 | 40 | 46 | 40 | 10 | 75 |
| Blockcopolykondensat | | | | | | C1 | C1 | C2 | C3 | C4 | C5 | C6 | C7 | C8 |
| | | Gew.% | | | | 20 | 10 | 20 | 10 | 5 | 10 | 30 | 10 | 5 |
| E-Modul | 53455 | N/mm² | 3020 | 2830 | 2625 | 2880 | 3510 | 3660 | 2930 | 3580 | 3320 | 3610 | 2980 | 4170 |
| Schlagzähigkeit¹⁾ | 53453 | kJ/m² | 75 | 80 | 30 | k.Br.³⁾ | k.Br. | k.Br. | k.Br. | k.Br. | k.Br. | k.Br. | k.Br. | k.Br. |
| Abfall des Schubmoduls bei 200°C in % gegenüber Wert bei Raumtemperatur | | % | 63 | 65 | 97,5 | 97 | 96 | 81 | 92 | 72 | 62 | 56 | 40 | 75 |
| Lochschlagzähigkeit²⁾ | 53453 | kJ/m² | 40 | 42 | 22 | 48 | 110 | 95 | 73 | 92 | 75 | 81 | 77 | 105 |

¹⁾ bei 23°C
²⁾ bei 23°C
³⁾ k.Br. = kein Bruch

Tabelle 2: Fortsetzung

| Beispiel Nr. | DIN-Norm | 10 | 11 | 12 | 13 | 14 | 15 | 16 | 17 | 18 | 19 | 20 | 21 | 22 |
|---|---|---|---|---|---|---|---|---|---|---|---|---|---|---|
| Polyarylethersulfon | | A3 | A3 | A4 | A5 | A6 | A4 | A5 | A7 | A7 | A1 | A2 | A5 | A4 |
| | | 40 | 50 | 50 | 68 | 25 | 20 | 10 | 45 | 70 | 50 | 35 | 25 | 10 |
| Polyaryletherketon | | B6 | B1 | B6 | B5 | B1 | B1 | B1 | B7 | B8 | B1 | B1 | B5 | B1 |
| | | 45 | 40 | 45 | 30 | 25 | 70 | 70 | 45 | 20 | 20 | 15 | 30 | 70 |
| Blockcopolykondensat | | C9 | C10 | C11 | C12 | C13 | C14 | C15 | C16 | C17 | C1 | C5 | C12 | C15 |
| | | 15 | 10 | 5 | 2 | 50 | 10 | 20 | 10 | 10 | 10 | 20 | 15 | 20 |
| E-Modul | 53455 | 3580 | 3510 | 3620 | 3370 | 3510 | 3980 | 3870 | 3610 | 3260 | 7160 | 10750 | 5370 | 3890 |
| Schlagzähigkeit[1] | 53453 | k.Br. | k.Br. | k.Br. | 146 (30%) | k.Br. | k.Br. | k.Br. | k.Br. | k.Br. | 34 | 28 | 23 | k.Br. |
| Abfall des Schubmoduls bei 200°C in % gegenüber Wert bei Raumtemperatur | | 64 | 61 | 56 | 37 | 67 | 45 | 42 | 55 | 29 | 87 | 58 | 41 | 46 |
| Lochschlagzähigkeit[2] | 53453 | 99 | 95 | 103 | 88 | 87 | 115 | 117 | 102 | 89 | 13 | 7,9 | 11 | 65 |
| Glasfaser | Gew.% | | | | | | | | | | 20 | 30 | | |
| Wollastonit | Gew.% | | | | | | | | | | | | 30 | |

[1] bei 23°C
[2] bei 23°C
3) k.Br. = kein Bruch

## Patentansprüche

**1.** Hochtemperaturbeständige thermoplastische Formmassen, enthaltend als wesentliche Komponenten
A) 10 bis 89 Gew.% eines Polyarylethersulfons,
B) 10 bis 89 Gew.% eines Polyaryletherketons,
C) 1 bis 30 Gew.% eines Blockcopolykondensats, aufgebaut aus
$C_1$) 20 bis 98 mol.% Polyarylethersulfonblöcken mit einem Molekulargewicht $\overline{M}_n$ im Bereich von 1500 bis 30.000 und
$C_2$) 2 bis 80 mol.% Polyaryletherketonblöcken.

**2.** Hochtemperaturbeständige thermoplastische Formmassen nach Anspruch 1, dadurch gekennzeichnet, daß das Polyarylethersulfon A) aufgebaut ist aus Einheiten der Formeln I und/oder II

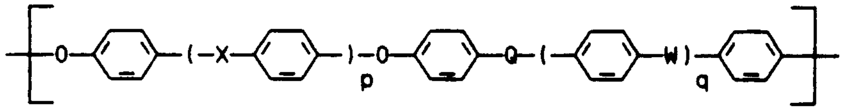

(I)

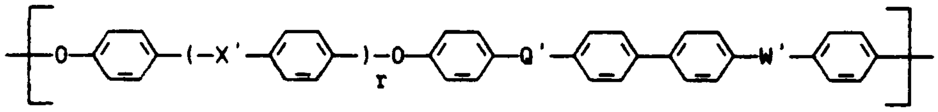

(II)

oder deren kernsubstituierten $C_1$-$C_6$-Alkyl- oder Alkoxy-, Aryl-, Chlor- oder Fluorderivaten, wobei X, X′, Q, Q′, W und W′ unabhängig voneinander -$SO_2$-, -O-, eine chem. Bindung oder -CRR′- sein können und jeweils mindestens einer der Substituenten X, Q oder W -$SO_2$- ist, R und R′ jeweils Wasserstoffatome, $C_1$-$C_6$-Alkyl- oder $C_1$-$C_6$-Alkoxygruppen, Arylgruppen oder deren Fluor- oder Chlorderivate darstellen, und p, q und r jeweils den Wert 0 oder 1 haben.

**3.** Hochtemperaturbeständige thermoplastische Formmassen nach einem der Ansprüche 1 und 2, dadurch gekennzeichnet, daß das Polyaryletherketon B) aufgebaut ist aus Einheiten der allgemeinen Formeln III und/oder IV

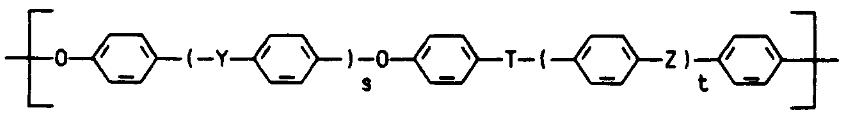

(III)

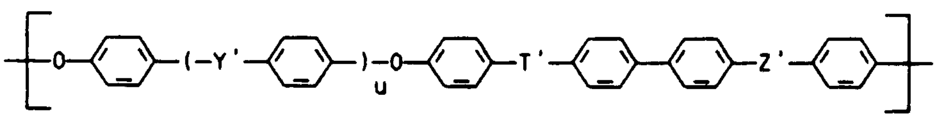

(IV)

oder deren kernsubstituierten $C_1$-$C_6$-Alkyl-, $C_1$-$C_6$-Alkoxy-, Aryl-, Chlor- oder Fluorderivaten, wobei Y, Y′, T, T′, Z und Z′ jeweils -CO-, CR″R‴, eine chem. Bindung oder -O- sein können und mindestens einer der Substituenten Y, T und Z bzw. Y′, T′ und Z′ -CO- ist, R″ und R‴ die gleiche Bedeutung wie R und R′ haben können, und s, t und u jeweils den Wert 0 oder 1 haben.

**4.** Verwendung einer Formmasse nach einem der Patentansprüche 1, 2 oder 3 zur Herstellung von Formkörpern und Leiterplatten.

## Claims

**1.** A high temperature resistant thermoplastic molding composition containing as essential components
- A) from 10 to 89% by weight of a polyaryl ether sulfone,
- B) from 10 to 89% by weight of a polyaryl ether ketone and
- C) from 1 to 30% by weight of a block copolycondensate composed of
  - $C_1$) from 20 to 98 mol % of polyaryl ether sulfone blocks having a molecular weight $\overline{M}_n$ within the range from 1,500 to 30,000 and
  - $C_2$) from 2 to 80 mol % of polyaryl ether ketone blocks.

**2.** A high temperature resistant thermoplastic molding composition as claimed in claim 1, wherein the polyaryl ether sulfone A) is composed of units of the formulae I and/or II

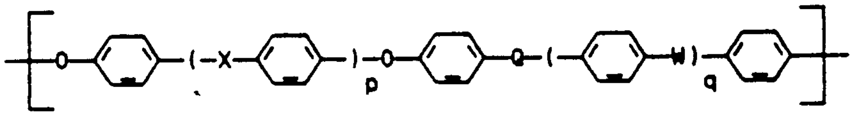

(I)

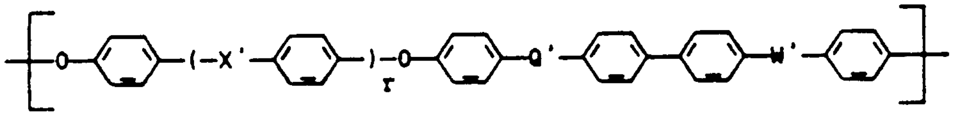

(II)

or their ring-substituted $C_1$-$C_6$-alkyl, $C_1$-$C_6$-alkoxy, aryl, chlorine or fluorine derivatives, where X, X', Q, Q', W and W' may each be independently of the others $-SO_2-$, -O-, a chemical bond or -CRR'- and at least one of the substituents X, Q or W is $-SO_2-$, R and R' are each hydrogen, $C_1$-$C_6$-alkyl, $C_1$-$C_6$-alkory or aryl or fluorine or chlorine derivatives thereof, and p, q and r are each 0 or 1.

**3.** A high temperature resistant thermoplastic molding composition as claimed in claim 1 or 2, wherein the polyaryl ether ketone B) is composed of units of the

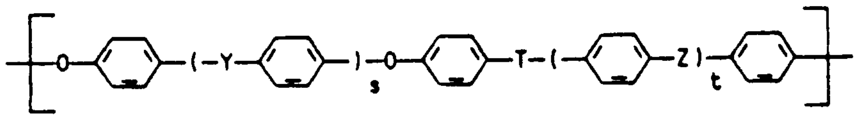

(III)

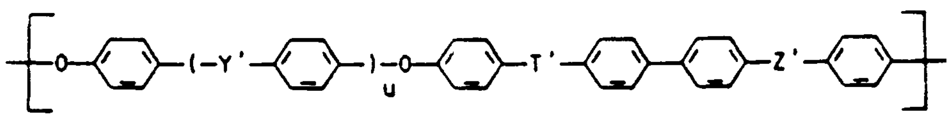

(IV)

general formulae III or IV or their ring-substituted $C_1$-$C_6$-alkyl, $C_1$-$C_6$-alkory, aryl, chlorine or fluorine derivatives, where Y, Y', T, T', Z and Z' may each be -CO-, CR''R''', a chemical bond or -O-and at least one of the substituents Y, T and Z or Y', T' and Z, is -CO-, R'' and R''' may each be defined in the same way as R and R', and s, t and u are each 0 or 1.

**4.** The use of a molding composition as claimed in patent claim 1 or 2 or 3 for producing a molding or a circuit board.

**Revendications**

**1.** Matières à mouler thermoplastiques, stables aux températures élevées, qui contiennent, à titre de composants essentiels,
A) 10 à 89% en poids d'une polyaryléthersulfone,
B) 10 à 89% en poids d'une polyaryléthercétone,
C) 1 à 30% en poids d'un produit de polycondensation à blocs, constitué de
$C_1$) 20 à 98% molaires de blocs polyaryléthersulfone d'un poids moléculaire $M_n$ qui varie de 1500 à 30000 et
$C_2$) 2 à 80% molaires de blocs de polyaryléthercétones.

**2.** Matières à mouler thermoplastiques, stables aux températures élevées selon la revendication 1, caractérisées en ce que la polyaryléthersulfone A) est constituée d'unités des formules I et/ou II

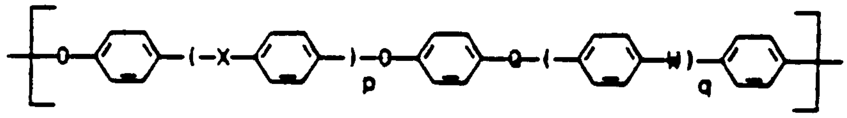 (I)

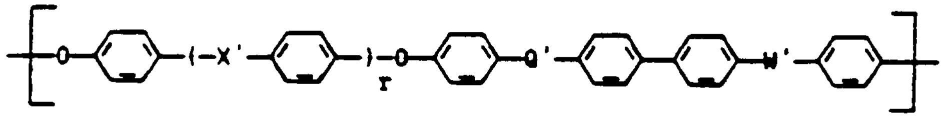 (II)

ou leurs dérivés de substitution dans le noyau par des atomes de chlore ou de fluor, par des radicaux aryle, par des radicaux alcoxy ou alkyle en $C_1$ à $C_6$, où X, X', Q, Q', W et W' représentent, indépendamment les uns des autres, $-SO_2-$, -O-, une liaison chimique ou -CRR'- et à chaque fois au moins l'un des substituants X, Q et W représente - $SO_2$- R et R' représentent chacun un atome d'hydrogène, un radical alkyle en $C_1$-$C_6$ ou alcoxy en $C_1$-$C_6$, un radical aryle ou leurs dérivés fluorés ou chlorés et p, q et r sont chacun égaux à 0 ou à 1.

3. Matières à mouler thermoplastiques, stables aux températures élevées selon l'une des revendications 1 et 2, caractérisées en ce que la polyaryléthercétone B) est constituée d'unités des formules générales III et/ou IV

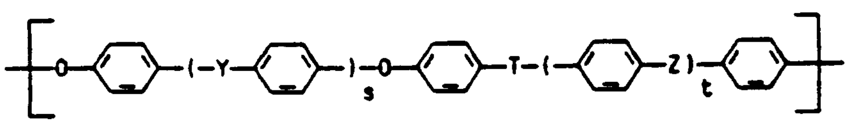 (III)

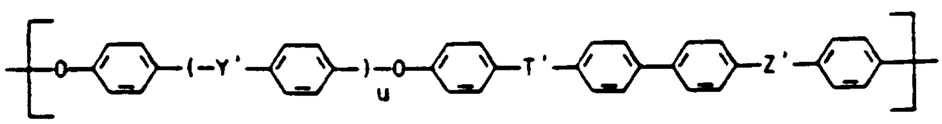 (IV)

ou leurs dérivés de substitution dans le noyau par des atomes de chlore ou de fluor, des radicaux aryle, des radicaux alkoxy en $C_1$-$C_6$ ou alkyle en $C_1$-$C_6$, où Y, Y', T, T', Z et Z' représentent chacun -CO-, CR"R''', une liaison chimique ou -O- et au moins l'un des substituants Y, T et Z ou Y', T' et Z' représente -CO-, R" et R''' ont les mêmes significations que celles indiquées pour R et R' et s, t et u sont chacun égaux à 0 ou à 1.

4. Utilisation d'une matière à mouler suivant l'une quelconque des revendications 1, 2 et 3 pour la fabrication d'articles moulés et de panneaux conducteurs.